# EUROPEAN PATENT APPLICATION

(11) **EP 3 174 190 A1**
(43) Date of publication of application: **31.05.2017**
(21) Application number: 15196095.2
(22) Date of filing: 24.11.2015
(51) Int. Cl.: H02M 7/483

(54) **THREE LEVEL CONVERTER**

(71) Applicant: ABB Schweiz AG, 5400 Baden (CH)
(72) Inventor: Soeiro, Thiago Batista, 5415 Nussbaumen (CH); Park, Ki-Bum, 5442 Fislisbach (CH); Huusari, Juha, 8055 Zürich (CH); Canales, Francisco, 5405 Baden-Dättwil (CH)
(74) Representative: ABB Patent Attorneys

(57) **Abstract**

The present invention is concerned with a three-level power electronic converter circuit topology with a first, lower frequency stage including a larger number of lower frequency switches and with a second, higher frequency stage including a smaller number of higher frequency switches. Only the higher frequency switches are realized or implemented by fast switching, wide bandgap semiconductors while the lower frequency switches are realized by conventional silicon based semiconductor switches, resulting in a split frequency converter circuit with an optimized use of, and investment in, fast switching semiconductors. The proposed power converter solution is well-suited for grid-connected inverter applications aiming for high power density.

## Description

### FIELD OF THE INVENTION

The invention relates to the field of power electronic converters and specifically to a three-level converter circuit topology.

### BACKGROUND OF THE INVENTION

Multilevel converters are widely used for single- and three-phase bi-directional grid-connected applications in the medium or low voltage range, including rolling mills, fans, pumps, marine appliances, mining, traction, uninterrupted power supply and renewable energy integration. Attractive characteristics of multilevel converters include relatively low harmonic amplitudes at the converter input and output terminals, reduced switching losses, as well as reduced electromagnetic interference.

In order to reduce cost and volume of a grid-connected power electronic converter, circuit topologies with a low number of fast switching semiconductor devices and a high system power density are favoured. Passive filtering and cooling devices as the key components limiting the power density of the converter circuit may be reduced in size by increasing a switching frequency of the semiconductors. This in turn is enabled by the superior switching loss performance of wide bandgap semiconductors, such as Silicon Carbide (SiC) and Gallium Nitride (GaN) based power semiconductor switches which, however, today are still much more expensive than Silicon (Si) based semiconductors.

The patent application US 2009/0003024 discloses a conventional three-level Neutral-Point-Clamped Converter (NPCC) as well as a three-level T-type converter circuit. The former circuit topology may handle higher DC voltages with lower voltage rating semiconductors, while the latter circuit topology features a reduced number of diodes. Both circuit topologies require, for a full power factor implementation of a three-phase three-level inverter system, four fast-switched active semiconductors per phase, hence a full SiC or GaN based device implementation thereof may become very costly.

### DESCRIPTION OF THE INVENTION

It is therefore an objective of the invention to increase a power density of a three-level power electronic converter. This objective is achieved by a three-level converter circuit topology and by a three-phase inverter according to the independent claims. Preferred embodiments are evident from the dependent patent claims.

According to the invention, a three-level converter circuit topology is proposed with a first, lower frequency stage including a larger number of lower frequency switches and with a second, higher frequency stage including a smaller number of higher frequency switches. Only the higher frequency switches are realized or implemented by fast switching, wide bandgap semiconductors while the lower frequency switches are realized by conventional silicon based semiconductor switches, resulting in a split-frequency bridge circuit with an optimized use of, and investment in, fast switching semiconductors. The proposed power converter solution is well-suited for grid-connected inverter applications aiming for high power density.

Specifically, a single-phase three-level power electronic converter circuit includes
- an intermediate DC link comprising a first and a second capacitor connected in series at a capacitor intermediate point and arranged between a first and a second DC terminal;
- a first half bridge comprising a first and a second switch connected in series at a first switch intermediate point and arranged between the first DC terminal and the capacitor intermediate point;
- a second half bridge comprising a first and a second switch connected in series at a second switch intermediate point and arranged between the capacitor intermediate point and the second DC terminal;
- an inverter unit connected via a first and a second unit terminal to the first and the second switch intermediate point, respectively, and including a first and a second switch connected in series at a unit intermediate point and arranged between the first and second unit terminal, including an AC terminal connected to the unit intermediate point via a filter inductor, and including a unit capacitor arranged between the first and the second unit terminal in parallel to the first and second switch of the inverter unit. The unit capacitor provides a low inductance commutation path for the first and the second switch of the inverter unit. A low inductance commutation path allows a reduction of the semiconductor costs and an improvement in the switching mechanism, and is specifically interesting for wide bandgap semiconductors.

In an advantageous variant of the invention the three-level converter circuit includes at least one inductor to reduce a current high frequency harmonic content across the first and second capacitor, and arranged in one or more of the following locations:
- between the first switch intermediate point and the first unit terminal;
- between the second switch intermediate point and the second unit terminal;
- between the capacitor intermediate point and a bridge intermediate point connecting the first and second half bridge.

In preferred embodiments the three-level converter circuit generates, in an inverter operation, an AC current or voltage with a variable AC frequency at the AC terminal, wherein the first and second switches of the first and second half bridge are operated at a switching frequency of less than ten times the AC frequency, and wherein the first and second switch of the inverter unit are operated at a switching frequency of more than ten times the AC frequency. Preferably, the first and second switches of the first and second half bridge are Si-based, and the first and second switch of the inverter unit are based on a semiconducting material with a wide band gap, specifically SiC or GaN.

The invention is further directed to a three-phase power electronic inverter with a DC link and, for each phase, a three-level split-frequency bridge circuit including a first, lower frequency stage with a first number of Si-based switches connected in parallel to the DC link and including a second, higher frequency stage with a second number of SiC- or GaN-based switches connected to the first stage and connected to an AC terminal of the phase, wherein the first number is larger than the second number.

### BRIEF DESCRIPTION OF THE DRAWINGS

The subject matter of the invention will be explained in more detail in the following text with reference to preferred exemplary embodiments which are illustrated in the attached drawings, of which:
- Fig.1: schematically shows a three-level converter circuit according to a first embodiment;
- Fig.2: depicts main waveforms of the converter circuit of Fig.1;
- Fig.3: shows a three-phase three-level inverter configuration;
- Fig.4: depicts a single-phase inverter with an interleaving switching cell arrangement; and
- Fig.5: depicts three alternative second-stage, fast-switching inverter units.

### DETAILED DESCRIPTION OF PREFERRED EMBODIMENTS

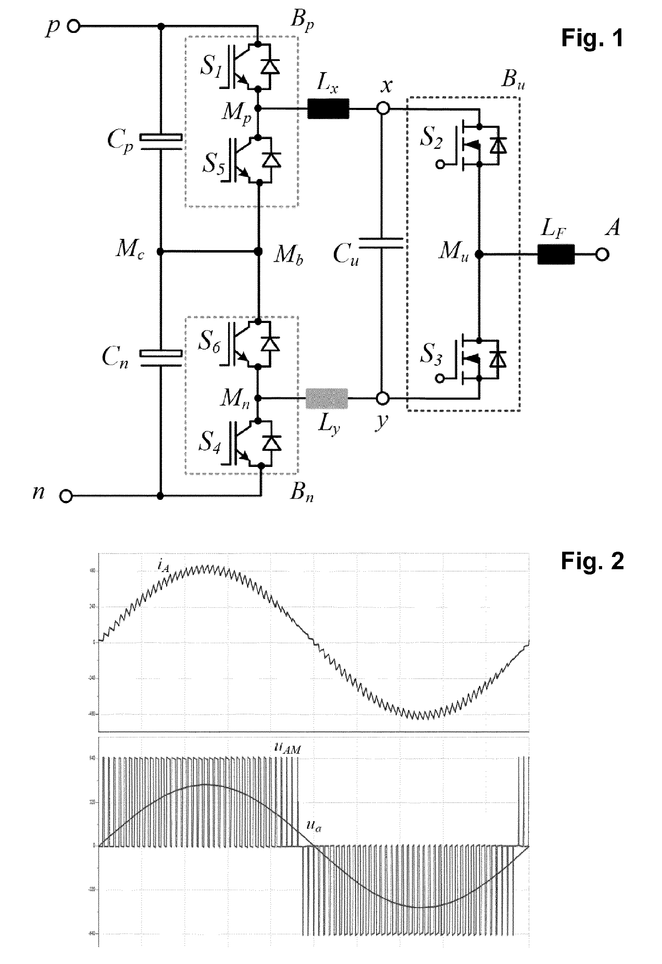

Fig.1 shows a three-level converter according to a first embodiment of the invention. A first, or positive, DC terminal p is connected to a second, or negative, DC terminal n via a series connection of two capacitors Cₚ, Cₙ connected to each other at capacitor intermediate point M_{c}. The two DC terminals p, n are also connected via a series connection of a first half bridge Bₚ and a second half bridge Bₙ connected to each other at bridge intermediate point M_{b}. The first half bridge Bₚ includes a series connection of two switches S₁, S₅ connected to each other at first switch intermediate point Mₚ while the second half bridge Bₙ includes a series connection of two switches S₆, S₄ connected to each other at second switch intermediate point Mₙ. The capacitor intermediate point M_{c} is connected to the bridge intermediate point M_{b}.

The first switch intermediate point Mₚ is connected via first unit inductor Lₓ to a first unit terminal x of a second-stage, or fast switching, inverter unit, while the second switch intermediate point Mₙ is connected to a second unit terminal y of the second-stage inverter unit. The inverter unit includes a unit capacitor Cᵤ and a unit bridge Bᵤ with a series connection of two high frequency switches S₂, S₃ connected to each other at unit intermediate point Mᵤ. The unit capacitor Cᵤ and the series connection of the two high frequency switches S₂, S₃ are connected in parallel to the unit terminals x, y. The unit intermediate point Mᵤ is connected via inductance or filter choke L_{F} to AC terminal A.

The converter circuit of Fig.1 includes the two capacitors Cₚ, Cₙ as a DC link and a single-phase two-stage bridge circuit connecting the first input DC terminal p and the second input DC terminal n to the load terminal A. A DC power source, for instance with a DC voltage uₚₙ of 1.5 kV for photovoltaic (PV) applications, or an intermediate link fed by a rectifying converter stage may be connected to the input DC terminals, while the load terminal may be connected to an electrical energy distribution grid or to an AC load, for instance a variable speed drive application with a variable frequency of up to 500 Hz.

The two voltage-dividing capacitors Cₚ, Cₙ may preferably be of equal capacitance, and capacitor intermediate point M_{c} may be a common earth terminal connected to ground potential. A second unit inductor L_{y} may be provided between the second switch intermediate point Mₙ and the second unit terminal y, in which case the unit first inductor Lₓ and the second unit inductor L_{y} may even be coupled. Alternatively, the first and second unit inductors may be replaced by an inductor provided between capacitor intermediate point M_{c} and bridge intermediate point M_{b}. These inductor configurations are designed to reduce the current high frequency harmonic content across the capacitors Cₚ and Cₙ, which effect may also be obtained with the leakage inductance inherent in the circuit layout even in the absence of the inductors mentioned. The switches S₁, S₅, S₆, S₄ of the two half bridges Bₚ, Bₙ may conduct current in one forward direction only, specifically in a forward direction from the first DC terminal p to the second DC terminal n, and each switch may have a diode connected in parallel with opposite forward direction for bidirectional operation.

Fig.2 depicts the main waveforms of the converter circuit of Fig.1. The top graph shows the current generated at unit intermediate point Mᵤ while the bottom graph shows the three-level AC output voltage u_{AM} generated at unit intermediate point Mᵤ and the filtered grid voltage u_{A} at AC terminal A. The corresponding gate signals are generated according to converter switching states P, MP, MN, N listed in the following table. High frequency switching transitions involving only the switches S₂ and S₃ occur between the switching states P and MP, or between the switching states N and MN, and result in the pulsed square-wave pattern, or spikes, of u_{AM} within one half-wave. Low frequency switching transition involving all six switches of the converter only occur at, or close to, zero crossing of the resulting current through the AC terminal A. In space vector modulation, the low frequency transitions may exclusively occur between switching states MP and MN, while in pulse width modulation, transitions between P and MN or P and N may occur as well.

| **Switching State** | S1 | S2 | S3 | S4 | S5 | S6 |
|---|---|---|---|---|---|---|
| ***P*** | 1 | 1 | 0 | 0 | 0 | 1 |
| ***MP*** | 1 | 0 | 1 | 0 | 0 | 1 |
| ***MN*** | 0 | 1 | 0 | 1 | 1 | 0 |
| ***N*** | 0 | 0 | 1 | 1 | 1 | 0 |

As is apparent from the above, a single-phase full power factor implementation of the converter circuit of Fig.1 only requires two fast-switched active semiconductor devices S₂, S₃. The low frequency switches S₁, S₅, S₆, S₄ of the two half bridges only operate at a low frequency of the order of the frequency of the AC current at the AC terminal A, such as a line frequency of 50 Hz in grid-connected applications or a variable frequency in variable speed drive applications. The low frequency switches therefore may include solid-state silicon-based semiconductor switches with a low-forward voltage drop leading to reduced conduction losses and lower semiconductor costs, such as insulated-gate bipolar transistors (IGBTs), integrated gate-commutated thyristors (IGCTs), metal oxide semiconductor field-effect transistors (MOSFETs) and gate turn-off thyristors (GTOs). On the other hand, the high frequency switches S₂, S₃ of the inverter unit operate at a high frequency at least one order of magnitude above the frequency of the AC current at the AC terminal A. The high frequency switches therefore may include semiconductor switches based on wide bandgap semiconductors such as Silicon Carbide (SiC) or Gallium Nitride (GaN).

Additionally, the unit capacitor Cᵤ of the second-stage inverter unit provides for a commutation path for the fast switches of the unit bridge Bᵤ with a low-inductance. This commutation path in particular excludes the aforementioned first and second unit inductors as well as further elements or connecting cables that may contribute to a leakage inductance of the commutation path. A circuit layout with a low commutation inductance is advantageous to safeguard the reliability of the system when switching high di/dt currents as over-voltages generated across these devices are reduced. Due to the low leakage inductance the proposed circuit can be implemented with a commercial, off-the-shelf half-bridge semiconductor module in unit bridge Bᵤ.

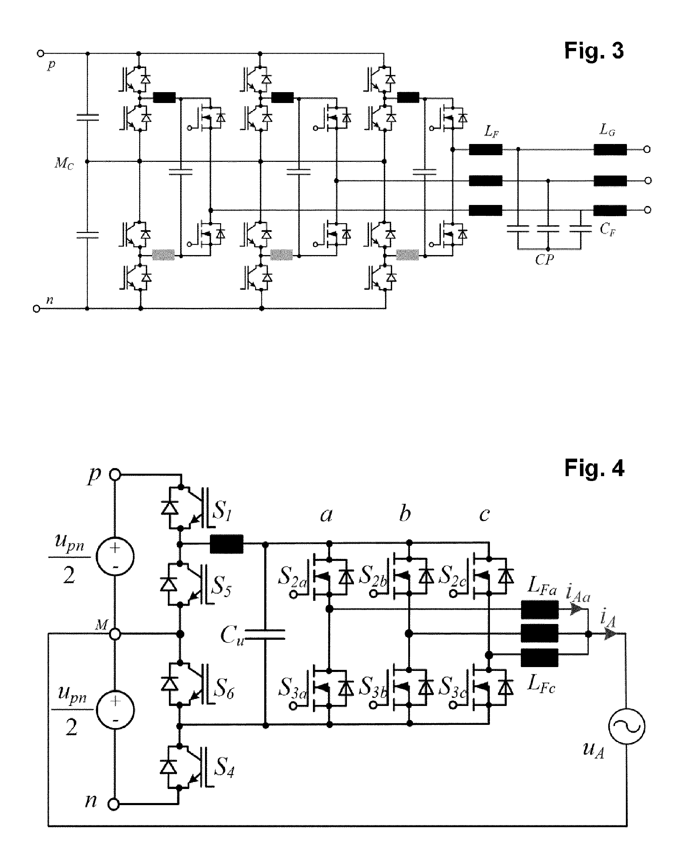

Fig.3 shows a three-phase three-level inverter configuration with a DC link between DC terminals p, n connected in parallel to three single-phase split-frequency bridge circuits as described above. The unit intermediate point of each phase is connected to the respective AC terminal A, B, C via an LCL filter replacing the single inductance or filter choke of the first embodiment. An optional connection from a common point CP of the LCL filter to the capacitor intermediate point M_{c} may reduce common node voltage noise.

Fig.4 depicts a single-phase inverter with three second, higher-frequency stages or half-bridge cells a, b, c connected in parallel. Each of the higher-frequency stages connects to a respective filter inductance L_{Fa}, L_{Fc} wherein the filter inductances in turn connect to grid terminal A such that a terminal current i_{A} is the sum of three filter currents i_{Aa}, i_{Ac}. The fast-switching devices of the higher-frequency stages in interleaving switching cell arrangement operate in Triangular Current Mode (TCM) with interleaved gate pulses to prevent a high current ripple flowing through the filter inductances L_{Fa}, L_{Fc} from flowing through the grid terminal A.

TCM which is very attractive for applications aiming for high power efficiency performance. In TCM operation, a negative current is used to fully charge/discharge the parallel capacitance of the Mosfets prior to the turn-on switching in such a way that the device commutates under ZVS. As the parallel capacitance works as a turn-off snubber for the switch, lower turn-off losses are expected. Additionally, the reverse-recovery behaviour of the anti-parallel diode is irrelevant, and consequently very low switching losses are achieved. Another advantage of the TCM operation is the smooth switch commutations derived from the soft-switching mechanism which leads to lower EMI emissions.

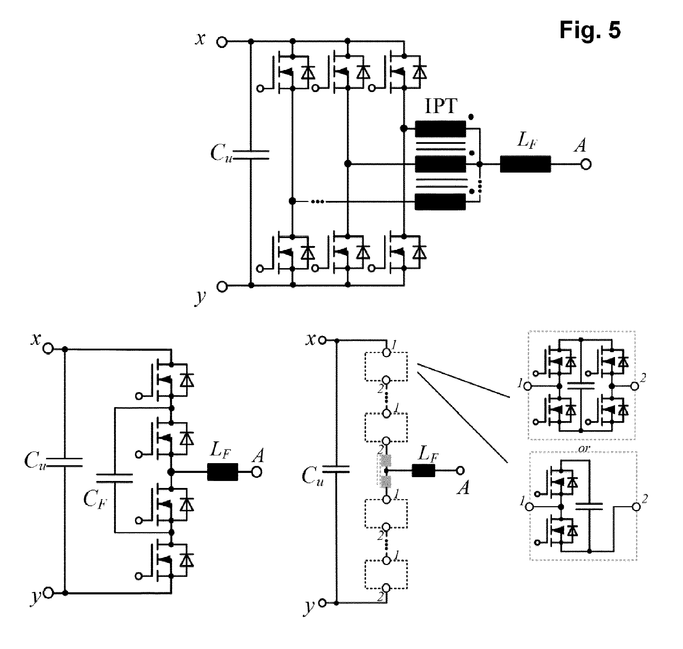

Fig.5 depicts three alternative implementations of the second-stage, fast-switching inverter unit, with different fast-switched semiconductor circuits intended to replace the unit bridge of the first embodiment, and to be connected between the first and second unit terminal x, y and the AC terminal A. These alternatives are well known in the art and feature specific advantages at the expense of an increased number of fast switching devices. Specifically, the alternative circuits are well suited to increase the power handling capability and reduce conduction losses of the inverter by providing multiple parallel paths for the line current, or to reduce the required voltage blocking capability of the semiconductors by series connection of devices. Additional voltage levels may be generated at the AC terminal which may be used to cancel switching frequencies current harmonics across the line filter inductor L_{F}, which in turn may allow reducing the size of the latter.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A three-level converter circuit including
- a first and a second capacitor (Cₚ, Cₙ) connected in series at a capacitor intermediate point (M_{c}) and arranged between a first and second DC terminal (p, n);
- a first half bridge (Bₚ) comprising a first and second switch (S₁, S₅) connected in series at a first switch intermediate point (Mₚ) and arranged between the first DC terminal (p) and the capacitor intermediate point (M_{c});
- a second half bridge (Bₙ) comprising a first and second switch (S₆, S₄) connected in series at a second switch intermediate point (Mₙ) and arranged between the capacitor intermediate point (M_{c}) and the second DC terminal (n);
- an inverter unit connected via a first and second unit terminal (x, y) to the first and second switch intermediate point (Mₚ, Mₙ), respectively, and including, between the first and the second unit terminal (x, y), a unit capacitor (Cᵤ) as well as a first and second switch (S₂, S₃) connected in series at a unit intermediate point (Mᵤ).

2. The three-level converter circuit of claim 1, including at least one inductor (Lₓ, L_{y}) arranged in one or more of the following locations:
- between the first switch intermediate point (Mₚ) and the first unit terminal (x);
- between the second switch intermediate point (Mₙ) and the second unit terminal (y);
- between the capacitor intermediate point (M_{c}) and a bridge intermediate point (M_{b}) connecting the first and second half bridge (Bₚ, Bₙ).

3. The three-level converter circuit of one of claim 1 or 2, wherein an AC current with a AC frequency is generated at the AC terminal (A), the converter circuit including a controller adapted to
- operate the first and second switches (S₁, S₅; S₆, S₄) of the first and second half bridge (Bₚ, Bₙ) at a switching frequency of less than ten times the AC frequency, and to
- operate the first and second switch (S₂, S₃) of the inverter unit at a switching frequency of more than ten times the AC frequency.

4. The three-level converter circuit of claim 3, wherein the first and second switches (S₁, S₅; S₆, S₄) of the first and second half bridge (Bₚ, Bₙ) are Si-based, and wherein the first and second switch (S₂, S₃) of the inverter unit are based on a semiconducting material with a wide band gap.

5. A three-phase inverter with a DC link and, for each phase, a three-level bridge circuit including a lower-frequency stage with a first number of Si-based switches connected to the DC link and a higher-frequency stage with a second number of SiC- or GaN-based switches connected to a respective AC terminal (A, B, C), wherein the first number is larger than the second number.

6. The three-phase inverter of claim 6, wherein an AC current with a AC frequency is generated at the AC terminal of each phase, adapted to
- operate the first number of switches (S₁, S₅; S₆, S₄) at a switching frequency of less than ten times the AC frequency, and to
- operate the second number of switches (S₂, S₃) at a switching frequency of more than ten times the AC frequency.
